Europäisches Patentamt

**European Patent Office**

Office européen des brevets

(11) Publication number: **0 023 433**
**A2**

# (12) EUROPEAN PATENT APPLICATION

(21) Application number: **80302594.9**

(22) Date of filing: **30.07.80**

(51) Int. Cl.³: **G 01 D 15/18**
**B 41 J 3/04**

(30) Priority: **30.07.79 US 62440**

(43) Date of publication of application:
**04.02.81 Bulletin 81/5**

(84) Designated Contracting States:
**GB IT SE**

(71) Applicant: **XEROX CORPORATION**
**Xerox Square - 020**
**Rochester New York 14644(US)**

(72) Inventor: **Warren, Thomas, W.**
**396 Holt Road**
**Webster New York 14580(US)**

(74) Representative: **Weatherald, Keith Baynes et al,**
**European Patent Attorney c/o Rank Xerox Limited,**
**Patent Dept. Rank Xerox House 338 Euston Road**
**London NW1 3BH(GB)**

(54) High speed ink jet recording apparatus.

(57) A high speed ink jet recorder uses a plurality of equally spaced nozzles to write with fluid drops on a high speed rotating drum. The nozzles are spaced a given number of pixel positions apart. The nozzles simultaneously address all the pixels under them on a pixel by pixel basis during each revolution of the drum. The nozzles are displaced one pixel position each drum revolution. Therefore, after the number of drum revolutions equal to the spacing between nozzles, a full raster pattern of W x L pixels is addressed by the nozzles. The nozzles emit continuous streams of drops. An individual drop is charged if it is intended for the target. Uncharged drops are collected in a gutter and recirculated to the drop generator having the plurality of nozzles.

FIG. I

## HIGH SPEED INK JET RECORDING APPARATUS

This invention relates to recording systems and in particular to high speed fluid drop or ink jet raster image recording method and apparatus. The fluid drop generators used in the present invention are those wherein selected drops from a continuous stream are directed between trajectories that intersect either the target or a gutter or collection device.

Continuous drop ink jet generators are beneficial because of their high drop generation rate which extends to over 200,000 drops per second. The architecture in which the generators are found reflect a balance of interest between mechanical and electrical considerations. The considerations normally include cost and feasibility.

Recording with fluid drops is accomplished with a raster pattern made up of rows and columns of pixel positions. A fluid drop is placed on a pixel or not during the addressing of the pixel position. The drops placed on the target over which the raster image lays, form a visible image to the human eye. By way of example, at a resolution of 12 pixels per millimeter (mm) in both the $x$ and $y$ axis of an orthogonal raster, there are about up to 2600 pixel positions in a row across the width of a 216 x 280 mm sheet of paper (the target) and about up to 3360 pixel positions in a column down the length of the paper or page.

One system architecture is to build a fluid drop generator that includes 2600 nozzles for emitting continuous drop streams. Each nozzle is electrically addressed to select with a binary charging scheme whether a drop is to be placed on a given pixel within the row spanned by the generator. Subsequent rows are addressed by mechanically moving the bar generator relative to the target. This structure represents a high degree of mechanical and electrical complexity and as such is very costly even for modest reliability and resolution levels.

Another system architecture is to simplify the nozzle structure to a single nozzle. The single nozzle is translated axially along a cylindrical platen for holding the target by a moderate speed carriage device to address each pixel in a row. The platen is incremented one pixel position in a direction normal to the carriage travel for subsequent transverse trips along the platen. The handicap for this system is the large time required to construct a raster of the 216 x 280 mm size in the above example.

A third architecture is to combine the features of the first two systems by mounting multiple nozzles on the carriage that traverses a high resolution per minute (rpm) platen to write several traces of pixel positions on a skew or aligned to the rows or columns. Here the complexity and cost of both the mechanical and electrical systems are increased significantly over the second system.

In all the above architectures the accuracy of the alignment of a drop to an ideal raster position is critical for good image quality. Most attempts to meet alignment criteria are electrical and very costly. In addition, since most electrical systems experience errors due to heat, humidity and other environmental and operational considerations, the electrical systems lead to reliability problems and high maintenance costs.

Accordingly, the present invention aims at providing an ink jet printer permitting high-resolution raster imaging with economy and reliability.

Accordingly the present invention provides a fluid drop generator that has a large number of nozzles spaced equally across the width of a target to be recorded. The nozzle spacing is large to permit ease of manufacture, e.g. about 22 mm. The generator is mounted on a transport to move orthogonal to a target transport e.g. the periphery of a rotating drum. A key is that the entire raster image is created by a single traverse of the generator relative to the target transport. In the case of a drum transport, the drum rotates a finite number of full revolutions corresponding to the number of pixels ( $\underline{p}$ ) separating each nozzle. The generator transport translates the nozzles one pixel position along the drum for each revolution of the drum.

The video data for drop placement are electrically applied to each nozzle simultaneously for those pixel positions under the nozzles during a single revolution. An example of the various parameters for producing a raster image at 12 pixels per mm on a 216 x 280 target in one second is: a video data rate to each nozzle of about $10 \times 10^6$ bits per second; 100 nozzles spaced 21.6 mm apart; a target transport circumference of 300 mm; and a target transport speed of about 1692 revolutions per minute (rpm).

The generator transport includes a cam driven synchronously with the rotation of the target transport. A cam drive means of appropriate accuracy is possible because the generator is required to move through short distances, e.g. 21.6 mm, during a rather long time, e.g. one second, and no high speed reciprocating action is needed. That is, the raster image in the above example is generated in one second. The cam surface for the recording stroke is the most critical. After the recording, the generator is recycled back to the start of scan position by less critical portions of the cam surface. A comparatively long time period is available for the return to the start of scan position. That is the time during which the recorded target is removed from the target transport and a new target is loaded onto the transport.

United States Patent 4 069 486 (Fox) discloses a multiple nozzle drop generator mounted on a transport for axial movement relative to a high rpm drum that supports a record member to be recorded. The embodiments include both single and multiple rows or arrays of nozzles.

The Fox recorder writes an interlaced raster pattern as the nozzles travel one time along the length of the rotating drum. Fairly read, the Fox device neither describes nor suggests the present invention. To resemble the instant invention, the Fox device should be of either two design extremes within the limits of its teaching. One design extreme is to have a single row of N nozzles of a length to span the entire drum except for a dimension equal to one nozzle spacing $k$. According to the design criteria for a single nozzle array given at Column 5, lines 39-41, the nozzle array advances in the axial direction N resolution elements per single revolution of the print drum. Also the array has to move through a distance equal to about three times its own length to accomplish the interlacing. This is contrary to the instant invention which requires the nozzle array to move a single pixel position, i.e. one resolution element, during a single drum rotation and the total array motion is equal to the nozzle spacing minus one pixel. Also, lines 52-62 at Column 5 of Fox effectively preclude $k$ from equaling N. This limitation of $k \neq N$ restricts the Fox single array embodiments to arrays that are much shorter than the length of the drum.

The second design extreme suggested by Fox is that of a multiple row or array of nozzles that is nearly equal the length of the drum less k resolution elements, i.e. the lateral spacing between the nozzles. Once again, the criteria for this embodiment require the array to advance in the axial direction $N_T$ resolution elements, i.e. pixel positions, per revolution of the drum. In contrast, the invention calls for the generator to move a single pixel position, i.e. resolution element, per drum revolution. Fairly read, the Fox patent suggests multiple array generators with a dimension far less than the width of the raster image.

The present invention will now be described by way of example with reference to the accompanying drawings, in which:- ·

Figure 1 is a perspective view of fluid drop apparatus for making raster images in accordance with the present invention;

Figure 2 is a schematic of a raster pattern illustrating the columns or tracks of pixel positions addressed by the nozzles of a drop generator during multiple revolutions of a target transport, and

Figure 3 is a view of the drop generator, associated drop deflection means and the gutter suited for the present invention.

The drawings are not to scale and show a limited number of drop streams to simplify and thereby clarify the present description.

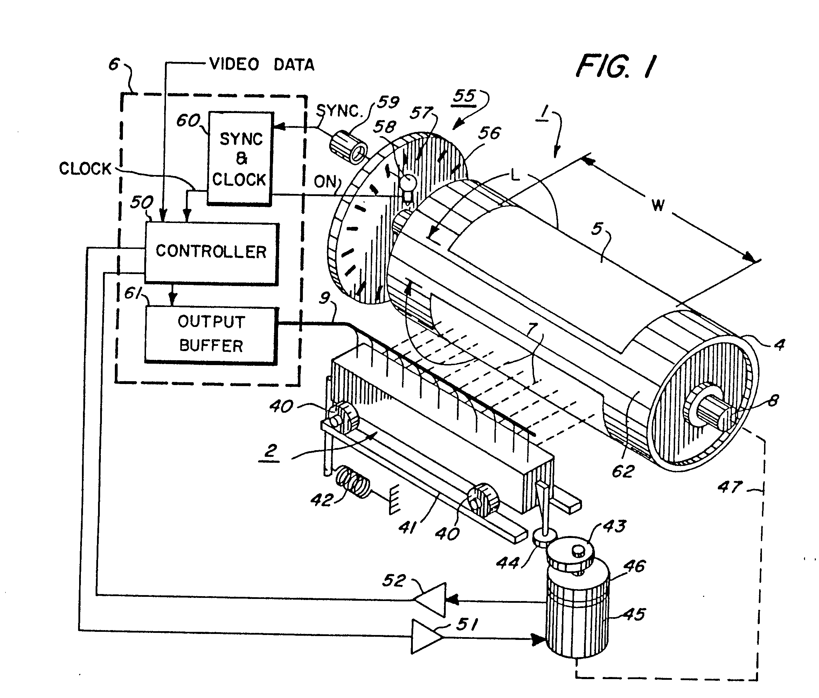

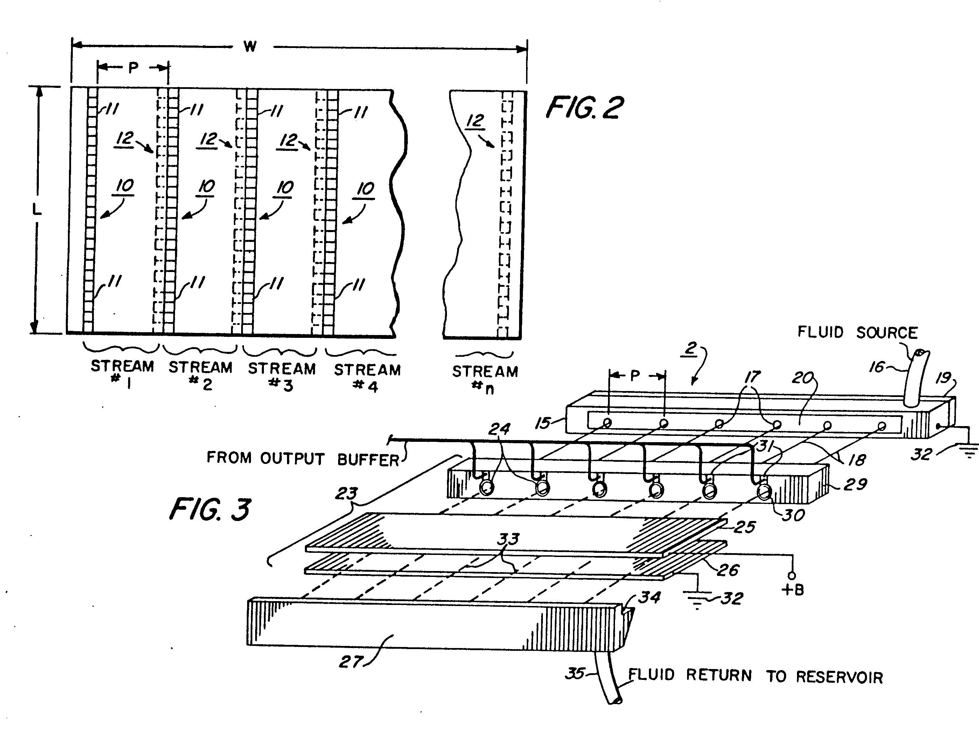

Referring to Figure 1, the fluid drop apparatus 1 includes the fluid drop generator 2, the drum 4 which is a revolving transport for a target 5 and the raster control means 6. The generator produces a plurality of parallel fluid drop streams 7 (eleven streams are shown in Figure 1 and six in Figure 3) that are directed toward the target carried on the periphery of the rotating drum.

The streams 7 are emitted from a linear array of nozzles (seen and discussed in connection with Figure 3) that are equally spaced from each other by $\underline{p}$ number of pixel positions. The total number of pixel positions in a row along the width W of a target is $\underline{p} \times \underline{n}$ where $\underline{n}$ is the number of nozzles.

The generator 2 is moved along the drum axis 8 one pixel position for each revolution of the drum. During a single drum revolution, all the pixel positions in a column around the periphery of the drum are addressed by a single nozzle located over the column. At each pixel position in the columns, the raster control means 6 simultaneously supplies video data to a drop in each stream by means of an electrical lead line in the bundle 9. Each line is coupled to a drop-charging device discussed in connection with Figure 3. After $\underline{p}$ number of drum revolutions, an W x L raster pattern is fully addressed. A drop is placed onto a particular pixel if the video signal applied over a lead line diverts the trajectory of a drop from a path aimed at a gutter to a path aimed at the pixel position on the target.

Turning to Figure 2, a target 5 having a width W and length L is shown laid out flat. There are $\underline{n}$ number of streams, so there are $\underline{n}$ number of columns 10 addressed by the streams during a single revolution of the drum 4. The small squares 11 represent the pixel positions in the columns 10 extending the length L of the target. There is a one pixel skew to the columns which is ignored in this discussion because of its negligible effect relative to the entire raster pattern.

The generator and all the streams 7 move one pixel position along axis 8 during a first revolution. During the second revolution a like set of $\underline{n}$ number of columns is addressed by the nozzles. During the $\underline{p}$th revolution, the last set of n number of columns 12 is addressed by the streams. Therefore, a single left-to-right, or right-to-left, motion of the generator 2 during $\underline{p}$ revolutions of drum 4 results in a full recording on the target.

Referring now to Figure 3, a discussion of the generator 2 at this point should clarify the system operation. Generator 2 includes a block 15 having a chamber extending its length for housing the fluid or ink used in the recording. The fluid enters the chamber through the conduit 16. The fluid is supplied from a fluid reservoir $\underline{via}$ a pump (neither are shown) under a static pressure of about 275,800 pascals. The plurality of nozzles 17 are orifices extending into the fluid chamber through which the fluid is emitted to form the streams 7. The static fluid pressure forces the fluid through the nozzles as continuous streams 18. At a fixed distance from the nozzles the continuous streams break up into uniformly sized and spaced drops. The drop formation is promoted by stimulating the fluid with an exciter at a frequency about that of the desired drop production rate. The drop generation frequency of these Sweet type ink jets (see U.S. Patent 3 596 275) extends to over 200,000 drops per second. The exciter 19 is a piezoelectric device that is coupled to a high frequency voltage source (not shown).

The nozzles 17 are equally spaced from each other by a precise distance $\underline{p}$. The tolerances of the nozzle spacing are critical for faithful alignment of drops to a raster pattern. The nozzles are therefore fabricated on a separate plate using photographic chemical resist overlay techniques common to the integrated circuit electrical industry. The plate is coupled to the block 15 over a long narrow slit cut through the block into the fluid cavity. The nozzles are also closely aligned to a straight line to create the parallel streams 7.

Even with the close manufacturing tolerances of the nozzle plates, some of the streams emitted through the nozzles may be skewed due to a distortion in the nozzle orifice, that is ideally a cylinder. The skew is corrected by electrical techniques, including positioning an electrode adjacent the continuous portion 18 of a stream. This skew electrode is electrically biased to create an electric field between it and the continuous stream that bends the continuous stream in a manner to offset the skew. The fact that the present invention enables the nozzles to be multiple pixel positions apart makes the use of skew electrodes physically practical. Also, the economics of manufacture and maintenance associated with the generator 2 are very favorable as compared to systems requiring only electrical drop alignment.

A drop deflection means 23 is physically integrated with the drop generator 2. It includes the charging electrodes 24 and the deflection plates 25 and 26. The charging electrodes must be stationary relative to the streams but the deflection plates can be separate. The deflection plates and gutter 27 are integrated with the generator 2 as a design choice to keep them part of one unit. The plates 25 and 26 and the gutter 27 could be fixedly positioned next to the drum 4 provided their length is adequate to operate on drops when the generator is at its extreme locations along its path of travel.

The charging electrodes are mounted on board 29. The board has holes 30 cut through it for passage of the drops in the streams. The charging electrodes 24 are metal plating on the inside walls of the holes. The metal plating includes an extension 31 to which the electrical lead lines 9 are coupled.

The charging electrodes 24 are located at the point where the continuous fluid streams break up into drops. The fluid is conductive and is conventionally electrically grounded through the block 15 as indicated by the electrical ground 32 coupled to block 15. A voltage applied to a charging electrode at the instant of drop formation causes the drop to have a net charge proportional to the applied voltage. In one convention, uncharged drops follow

the trajectory 33 that intersects the gutter 27. Charged drops of some minimum value are deflected upward over the lip 34 of the gutter and follow a trajectory that intersects the target on the drum 4.

The upward deflection of the charged drop is caused by an electric field between the deflection plates 25 and 26. Plate 26 is shown grounded and plate 26 is shown coupled to a + B voltage source (typically in the range of 2000-5000 volts). The polarities are merely illustrative and must be selected to conform to the polarity of the charge on the drops and the desired direction in which the drop trajectory is to be diverted. Typical voltage levels applied to a charging electrode are from 10 to 100 volts.

In the above system, it is preferred to operate solely in a binary mode. That is, if a drop is desired at a given pixel position presently being addressed as described above, a fixed voltage of, e.g. 30 volts, is applied to the charging electrode. If a drop is not desired at the given pixel position, the charging electrode voltage remains at or near ground potential.

As explained, the role of the gutter 27 is to collect drops not intended for the target. It includes a pan for collecting the intercepted drops and a drain hose 35 which leads back to a fluid reservoir for recirculation of the fluid through the generator 2.

Returning now to Figure 1, the generator transport and the raster control means 6 will be explained in further detail. The generator transport includes the wheels 40 journaled for rotation in the generator block or body 15. The wheels ride on a fixedly mounted rail 41. The generator is therefore able to move transversely relative to the target transport, i.e. drum 4, back and forth along rail 41. A spring 42 is fixedly mounted at one end and at the other is coupled to the generator block 15 to bias the generator against the eccentric cam 43. The cam follower 44 is fixedly coupled to the generator block at one end and slideably biased against the cam 43 at the other end.

The cam is rotated by the motor 45 coupled to the cam through the gear and clutch mechanism 46. The cam includes at least one precision surface for imparting a constant velocity to the generator 2 during at least p number of drum revolutions. The drum is also powered by motor 46 by an appropriate drive train 47 indicated by the dashed lines between the motor and the drum axle 8.

The cam is designed to accelerate the generator 2 to its desired velocity level prior to positioning the nozzles at their start-of-scan position, e.g. toward the left border of a target. The cam propels the generator for the distance $p$ and thereafter decelerates and returns the generator to a position for the next scan. These deceleration and repositioning motions need not be with the tolerances required for the scan stroke. Consequently, the cost of the generator transport is very economical and the mechanism is highly reliable. Functionally equivalent generator transports have as good or better economics of manufacture and reliability. The cam drive shown in Figure 1 is intended to be illustrative.

The raster control means 6 electrically orchestrates the recording process. A controller 50, e.g. an Intel 8080 microprocessor with associated memory, is programmed to command motor 45 through the interface device 51 to rotate the drum up to a fixed rpm in preparation for creation of a raster image. Also, the device 51 causes the clutch 46 to be engaged at the proper instant to start the generator sweep along the drum. The interface device 52 communicates drum speed and generator transport location and speed information back to the controller 50.

The controller keeps tab of the drum speed and angular location via the encoder 55. The encoder includes a transparent disc 56 mounted for rotation with the drum on its axis 8. Black, i.e. opaque, markings 57 are evenly distributed about the outer radius of the disc. A lamp 58 positioned on one side of the disc directs electromagnetic radiation through the transparent disc regions to the photodetector 59. Each time a marking moves between the lamp and photodetector a sync signal is generated. The sync signal from the photodetector is used to synchronize a high frequency clock 60. The clock signals are coupled to the controller 50 and are the means for instantaneously locating pixel positions in the raster pattern columns, e.g. columns 10 and 12 shown in Figure 2 and for gating video data to the charging electrodes in Figure 3. One of the markings on the disc is unique so that the exact angular position of the drum is known to the controller at all times.

Video data signals representative of a W x L raster image are generated at a separate location, either artificially or by means of a raster scanner moved over an original document desired to be reproduced on a target 5. Video data are loaded into allocated memory within the controller and formulated for application to the charging electrodes 24 (Figure 3) via the lead lines in the bundle 9. An output buffer 61, either part of the controller or a separate input/output device, is loaded in parallel with $n$ bits of video data corresponding to the instantaneous location of the $n$ nozzles 17 (Figure 3) in the generator 2. The $n$ bits of video data are applied in terms of either the above-mentioned 30 or zero volt signals to the individual charging electrodes 24 over individual lead lines 9. This occurs during a time much shorter than the time required to rotate drum 4 through an angle to position the next pixel in a column (e.g. columns 10 in Figure 2) under the nozzles 17 of generator 2. As the drum rotates the target pixel by pixel under the generator 2, new video data are loaded into the output buffer 61 and are gated out to the charging electrodes 24 by the clock signal that corresponds to the image data for that group of pixels.

As described, the generator is being translated transversely to the drum one pixel position during each drum rotation. After the drum has gone through $p$ number of rotations, the raster image is completed.

The target 5 is manually or automatically loaded onto and taken off the drum 4 during non-image forming cycles of the drum, or when it is at rest.

An example of specific geometric dimensions and speeds is helpful in understanding the invention and its various features. By way of example, a suitable device is one having 100 nozzles that makes a 200 x 300 mm raster image at a resolution of 12 pixels per mm in about one second. The required rpm is given by the formula:

$$\text{rpm} = \frac{\text{Video Data rate} \times 60}{\text{No. of nozzles (n)} \times \text{Resolution} \times \text{Drum Circumference}}$$

For a video data rate of $10 \times 10^6$ bits per second and for a drum circumference of 300 mm, again as an example, the rpm for the given parameters is:

$$\text{rpm} = \frac{(10)\,(10)^6\,(60)}{(100)\,(12)\,(300)} = 1670$$

The drum circumference of 300 mm is equal to the raster length L. In practice the raster length L is less than the circumference of the drum so that targets of like length can be loaded and unloaded from the drum using the dead space 62 between the ends of the target to grasp it.

The nozzle spacing $p$ for 100 nozzles across a 200 mm raster is $p$=2 mm. In terms of pixel positions, the spacing between nozzles is 2 mm x 12 pixels per mm, which is 24 pixel positions. The generator is moved along the drum axis one pixel position (0.083mm) each revolution of the drum and, after 24 drum revolutions, the full 2 mm. The rpm of 1670 is equal to 27.83 revolutions per second. Consequently, the full 200 x 300 raster is scanned by the apparatus 1 (Figure 1) in 0.86 seconds, which is about one second. -

The generator transport is required to move the generator 2 mm during 0.86 seconds. This motion is accurately achieved with inexpensive and reliable mechanisms such as the described cam gear drive shown in Figure 1. Also, the 2 mm nozzle spacing is advantageous for ease of manufacture for the nozzle plate 20 shown in Figure 3.

The video data rate of $10 \times 10^6$ bits per second is within economically acceptable limits. Again, by way of example, the disc 56 would typically include 100 markings about its periphery, which gives rise to 1000 sync pulses per drum revolution. This is 27,830 pulses per second at the 27.83 revolutions per second drum speed. The sync pulses in turn easily generate clock signals in the $100 \times 10^6$ bits per second range. This gives a clock rate 10 times greater than the video data rate for supplying $n$ bits of data to $n$ charging electrodes every pixel period. A pixel period, i.e. the time for the drum to rotate .083 mm, in this example is $9.9 \times 10^{-6}$ seconds which is about 10 times greater than necessary to handle the $10 \times 10^6$ bit per second video data rate.

The pixel size is about .083 mm. A drop in flight is about .0415 mm and the diameter of a nozzle 17 is about .0208 mm.

Various modifications and changes are apparent from the foregoing specification and drawings. These modifications and changes are intended to be within the scope of this invention. For example, a target transport that revolves a target about a closed path similarly to the drum 4 is a closed loop web transport journaled for rotation about two or more pulleys. Clearly, the drum rpm, data rate, number of nozzles, the nozzle spacing and the like parameters are variable over a wide range of practical values suitable for the apparatus of Figure 1.

- 1 -

Claims

1. Ink jet recorder apparatus(1) including:

a transport (4, 8, 47, 45) for moving a target (5) around a closed path at high speed;

an ink drop generator (2) for generating a plurality of equally-spaced streams (7) of ink drops in a row transverse to the direction of movement of the target;

means (25, 26) adjacent each stream for deflecting drop between trajectories that intersect either a gutter or the target path;

means (42, 44, 43, 45) for displacing the drop generator (2) transversely to the target path, and

raster control means (6, 55) for applying signals representative of raster pixel information to the deflection means simultaneously for all streams, characterised in that:

the end streams of the generator are separated by the width of the raster iamge less the distance separating adjacent streams;

in that the displacement means move the generator through one pixel position for each revolution of the transport, and

in that the target is rotated through $p$ revolutions per recording cycle, in which $p$ is the number of pixel positions separating adjacent streams.

2. The apparatus of claim 1 characterised in that the target transport (4, 8, 47, 45) includes a drum (4) journalled for rotation and having means for supporting a target (5) about its outer periphery (62).

3. The apparatus of claim 2 characterised in that the target transport further includes means for loading and unloading a target from the periphery of the drum.

4. The apparatus of any preceding claim, characterised in that the target transport speed of revolution equals the product of the number of signals per second applied to the deflection means times 60 seconds divided by the product of the number of streams times the circumference of the target path times the number of pixels per unit of length.

- 2 -

5. The apparatus of claim 4 characterised in that the target transport speed is substantially 1670 rpm, which is based on a signal rate of 10 x $10^6$ pixels per second, 100 streams from the generator, 12 pixels per millimeter, a drum circumference of 300 mm, whereby a raster image on a 200 x 300 millimeter target is created in about 0.86 seconds.

6. The apparatus of any preceding claim, characterised in that the generator includes a block (15) having a chamber therein, means (16) for coupling the chamber to a source of ink under pressure, a plurality of nozzles (17) equally spaced in a row extending the width of a raster image to be created less p number of pixel positions, and an exciter for causing the ink streams to break into drops of uniform size and spacing at substantially the same distance from the nozzles.

7. The apparatus of any preceding claim, characterised in that the deflection means includes a charging electrode (25) adjacent each stream of ink at the point of drop formation.

.8. The apparatus of claim 7, characterised in that the charging electrode is mechanically coupled to the generator for movement with it.

9. The apparatus of claim 7 or 8, characterised in that the deflection means includes parallel deflection electrodes (25, 26) parallel to the ink streams and coupled to a voltage source to establish an electric field between them for deflecting drops charged by the deflection means in a direction normal to their flight trajectory.

FIG. I

FIG. 2

STREAM #1   STREAM #2   STREAM #3   STREAM #4   STREAM #n

FIG. 3

FROM OUTPUT BUFFER

FLUID SOURCE

+B

FLUID RETURN TO RESERVOIR